# EUROPEAN PATENT APPLICATION

(11) **EP 3 701 792 A1**
(43) Date of publication of application: **02.09.2020**
(21) Application number: 18870448.0
(22) Date of filing: 17.10.2018
(51) Int. Cl.: A01K 23/00

(54) **BAG FOR REMOVING AND CLEANING UP DOG EXCREMENT**

(30) Priority: 27.10.2017 ES 201731301 U
(71) Applicant: Gomez Hinojosa, Jose Antonio, 14720 Almodovar Del Rio (Cordoba) (ES)
(72) Inventor: Gomez Hinojosa, Jose Antonio, 14720 Almodovar Del Rio (Cordoba) (ES)
(74) Representative: Bartrina Diaz, José María
(86) International application number: PCT/ES2018/070672
(87) International publication number: WO 2019/081791

(57) **Abstract**

The invention relates to an accessory for removing and cleaning up the excrement of pets such as dogs or cats, or for cleaning up the urine, oestrus secretions or vomit of the animal, which accessory consists of a plastic bag of the type commonly used for rubbish, provided with a cover of absorbent paper securely connected to the bag, covering two thirds thereof starting from the end that forms the bottom; designed so that, in the event that the animal finally defecates, the user places the bag on the hand with the paper cover facing the outside, removes the excrement and simultaneously cleans the affected area superficially, using the bag with its absorbent paper and, finally, turns the bag inside out using the other hand, closes the bag and deposits it in a litter bin or the like.

## Description

Bag for removing and cleaning up dog excrement.

### OBJECT OF THE INVENTION

The present invention, as its title indicates, refers to an accessory for the removal and cleaning of excrements from pets such as dogs or cats. Likewise, its application may be extended to the cleaning of urine, animal oestrus, vomiting, etc.

### BACKGROUND IN THE STATE OF THE ART

There is a growing awareness of the need to keep our cities clean. Above all, this idea is partially based on improving the appearance of our city, which means that it directly affects citizens, whether they own a pet or not: in this case a dog or a cat, helping to solve the problem of cleaning our cities' streets.

As the concentration of the population in the cities becomes greater, there is a greater census of pet animals in urban environments, with the resulting generation of fecal remains and other evacuations such as urine, animal oestrus, vomiting, etc., whose presence on the streets is not compatible with the concept of a modern, well-cared-for city that is attractive to its citizens.

Parallel to the sensitisation of users of pet animals, there are already specific ordinances in most of the municipalities, where fines are collected for not removing pet droppings.

For this reason, it is necessary that the state of the art evolve by providing cheap, comfortable and safe accessories that help pet users to keep our city, as well as other private spaces where the entry of animals is permitted, such as specific bars, neighborhood communities, shops, etc., clean.

In this regard, in many municipalities there is already free delivery of bags for the collection of dog excrements, and some supermarkets are even already marketing smaller bags for use in the removal of excrements.

Reviewing the state of the art on this subject, the following inventions have been found, identified by their publication number and title, respectively:
1. Hygienic bag for dog defecation, 1010590.
2. Bag for the collection of dog stools, 1000667.
3. Bag for animal faeces, 2274739.
4. Dog-waste collector, 1020700.
5. Container of bags for collecting canine excrement, 1032647.
6. Bag for animal excrement, 2299401.
7. Device for collecting dog excrements, 1078057.
8. Dog excrement collection device and method of operation, ES2564193 B1.
9. Dog excrement collector and similar WO 1998039517 A1.
10. Device comprising a disposable bag for the collection of animal excrement, WO 2005020676 A1.

However, with the "Bag for removing and cleaning up dog excrement", proposed with the present invention, a simple rubbish bag is provided with respect to the state of the art, which provides the following advantages:
- More hygienic or safe for the user, as well as less sensation of contact with animal excrements.
- It allows excrements to be removed and/or the evacuated liquids to be absorbed and, simultaneously, the floor to be swept, leaving the surface cleaner.
- Adapted to favor an easy and hygienic or contactless closure.
- Lower manufacturing cost.
- Easy market penetration because it is already in use without the incorporation of contact paper.
- Improved configuration by placing the joining flap of the strip or roll of bags on its side instead of the beginning and end of the bags, thus avoiding the closure of the bag being located at the bottom of the bag that collects the excrements and therefore favoring optimal stool collection and other evacuations, as this area is completely smooth. • Adaptation of the format of the bag, preventing it from containing a gluing fold at its lower end in order to generate the union between successive bags that make up the strip of joined bags forming a roll, in order to avoid the hands having less sensitivity in the lower end of the bag when removing a bag of the roll and using it, due to the presence of the crease that is replaced by a fold.

### EXPLANATION OF THE INVENTION

By way of explanation of the "Bag for removing and cleaning up dog excrement", it is a plastic bag of the type commonly used for rubbish, provided with an absorbent paper envelope attached jointly to the bag covering two thirds of it, this being measured from the end that makes the bottom, designed so that the owner of a dog will be able to take it with him when he or she takes the dog out or, simply, takes it for a walk, so that in the event that the animal does defecate, the bag can be put into the hand with the paper envelope outside, the excrement can be removed and superficial cleaning of the affected area can simultaneously be conducted using the bag with its absorbent paper and, finally, the bag can be turned over with the other hand, the bag closed and placed it in a wastebasket or similar.

### DESCRIPTION OF THE DRAWINGS

To complement the description that is being made and in order to contribute to a better understanding of the characteristics of the invention, according to a preferred example of a practical embodiment thereof, a set of drawings is included as an integral part of said description, wherein the following has been represented in an illustrative and non-limiting manner:
Figure 1.- Top view of" Bag for removing and cleaning up dog excrement".
Figure 2.- Perspective view of "Bag for removing and cleaning up dog excrement" with the user's hand inside.

In the aforementioned figures, the following constituent elements can be highlighted:
1. Plastic bag.
2. Bottom of the bag that makes contact with the ground.
3. Opening of the bag through which the hand is inserted.
4. Absorbent paper envelope for contact with excrement or other evacuations, as well as for better surface cleaning.

### PREFERRED EXAMPLE OF REALIZATION

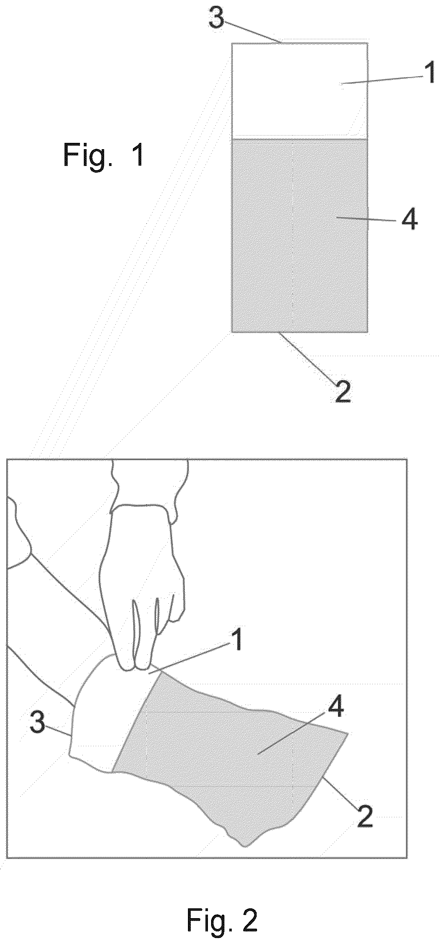

As a preferred embodiment of the "Bag for removing and cleaning up dog excrement", this can be carried out as shown in Figure 1, in a format adapted for its commercialisation in rolls of, for example, 25 units, as conventional rubbish bags are marketed, according to a black plastic bag 14 cm wide by 30 cm deep, provided with an absorbent paper envelope in the form of an outer layer adhered to the bag using contact glue to cover 20 cm of this bag from the end that makes the bottom.

In Figure 2, one may see the bag after the user has reached inside it, and the absorbent paper envelope 4 is arranged externally to make contact with the animal's excrement.

It is not deemed necessary for this description to be more extensive in order for a person skilled in the art to understand the scope of the invention and the advantages derived therefrom, the bag closure system by lacing or similar, the adaptation of the format of the bag so that there is no gluing fold at its lower end between the upper and lower sheet of the bag making it difficult to use it in this area, the materials used for the bag or paper, the method of joining, its dimensions or shapes will be subject to variation as long as this does not imply an alteration in the essential nature of the invention. The terms in which the specification has been described are to be understood in a broad and non-limiting sense.

## Claims

1. Bag for removing and cleaning up dog excrement, **characterised by** being formed from a plastic bag, provided with an external envelope made from absorbent paper united jointly to the bag covering approximately two thirds of the bag, this being measured from the bottom end.

## Amended claims

### Amended claims under Art. 19.1 PCT

1. Bag for removing and cleaning up dog excrement, **characterised by** being formed from a plastic bag, provided with an external envelope made from absorbent paper, in the form of an external laver adhered or united jointly to the bag covering approximately two thirds of the bag, this being measured from the bottom end; whose bottom of the bag is that which makes contact with the ground; and wherein the flap of union of the strip or roll of bags is placed on the side of the bag; and containing a gluing fold at its lower end for the union between successive bags that make up the strip of joined bags, which form a roll.
